(19) Europäisches Patentamt
European Patent Office
Office européen des brevets

(11) **EP 0 904 626 B1**

(12) **EUROPÄISCHE PATENTSCHRIFT**

(45) Veröffentlichungstag und Bekanntmachung des Hinweises auf die Patenterteilung:
**25.10.2000 Patentblatt 2000/43**

(21) Anmeldenummer: **97921774.2**

(22) Anmeldetag: **25.04.1997**

(51) Int Cl.[7]: **H02K 5/132**, H02K 9/19

(86) Internationale Anmeldenummer:
**PCT/EP97/02142**

(87) Internationale Veröffentlichungsnummer:
**WO 97/48167 (18.12.1997 Gazette 1997/54)**

(54) **FLÜSSIGKEITSGEFÜLLTER UNTERWASSERMOTOR**

LIQUID-FILLED UNDERWATER MOTOR

MOTEUR SUBMERSIBLE REMPLI DE LIQUIDE

(84) Benannte Vertragsstaaten:
**DE FR GB IT**

(30) Priorität: **13.06.1996 DE 19623553**

(43) Veröffentlichungstag der Anmeldung:
**31.03.1999 Patentblatt 1999/13**

(73) Patentinhaber: **KSB Aktiengesellschaft**
**67227 Frankenthal (DE)**

(72) Erfinder:
• **BEUKENBERG, Markus**
**D-66424 Homburg (DE)**

• **ECKER, Klaus**
**D-66424 Homburg (DE)**
• **HEIDER, Christian**
**D-66424 Homburg (DE)**

(56) Entgegenhaltungen:
EP-A- 0 280 660  EP-A- 0 342 554
EP-A- 0 493 704  US-A- 3 671 786

• **PATENT ABSTRACTS OF JAPAN vol. 9, no. 274 (E-354), 31.Oktober 1985 & JP 60 118040 A (TOSHIBA), 15.Juni 1985,**

**Beschreibung**

Die Erfindung betrifft eine flüssigkeitsgefüllte elektrische Maschine, die als Unterwassermotor ausgebildet ist, insbesondere zum Antrieb von vollständig getaucht betriebenen Arbeitsmaschinen, wobei im Motorinnenraum eine für Kühl- und Schmierzwecke verwendete Motorfüllflüssigkeit niedriger Viskosität angeordnet ist, der Motor für mittlere und große Antriebsleistungen ausgelegt ist und die Motorfüllflüssigkeit den Spalt zwischen Rotor- und Statorteil durchströmt.

Bei solchen Motoren, die infolge ihrer eingetauchten Bauweise über eine intensive Außenkühlung verfügen, wird der Stator erheblich weniger erwärmt. Dadurch tritt das Problem auf, die Abwärme des Rotors über den konstruktiv bedingten Spalt zwischen Rotor und Stator, der allgemein als Luftspalt bezeichnet wird, nach außen zu transportieren. Aufgrund der im Verhältnis zum Durchmesser großen Länge der gattungsgemäßen Maschinen ist eine Spaltkühlung durch hindurchströmende Motorfüllflüssigkeit nicht ausreichend, da die Reibungsverluste innerhalb des langen Spaltes sich nachteilig auf die Kühlwirkung auswirken.

Bei den gattungsgemäßen Maschinen bedingt der durchströmte Luftspalt zwischen Stator und Rotor infolge der Reibung eine Verlustleistung, die größer als 30 % der Gesamtverlustleistung der Maschine sein kann. Diese Verlustleistung wiederum wirkt als zusätzliche Wärmequelle für die angrenzenden Rotor- bzw. Statorwandflächen. Im Bereich des Stators bedeutet der zusätzliche Wärmeeintrag durch die Reibungsverluste eine zusätzliche Erwärmung der Statorwicklung, bzw. eine Reduzierung der Lebensdauer.

Derartige nasse und spaltrohrlose Motoren sind in Bezug auf den Außendurchmesser überproportional lang ausgebildet, wie beispielsweise die GB-A-983 643 zeigt. Zum Abtransport der auftretenden elektrischen Verlustleistung sind innerhalb des rotierenden Teiles Kanäle angeordnet und eine Pumpeinrichtung dient zur Umwälzung eines als Schmier- und Kühlmittel verwendeten Öles. Innerhalb des Motors existiert eine Haupt- und Hilfsströmung, wobei die Hilfsströmung die Rotorwelle vollständig durchströmt und beim Rückströmen aufgeteilt wird. Ein Teil der Hilfsströmung passiert Kühlkanäle zwischen Rotorwelle und Rotor. Ein anderer Teil fließt durch den Luftspalt zwischen Rotor und Stator zurück. Diese Bauart kann bedingt durch die hohe Viskosität des verwendeten Öls und die geringe Wärmekapazität des Öls bei größeren Antriebslasten den ausreichenden Abtransport der Verlustleistung nicht gewährleisten.

Durch die US-A-2 556 435 ist es bekannt, bei einem nassen Motor ein rückgekühltes Öl durch die Welle des Rotors in einen eine zusätzliche Kühlwirkung erbringenden Sumpf zu leiten. Von dort aus fließt es durch den Luftspalt zwischen Stator und Rotor zurück zu einem der Umwälzung dienenden Laufrad. Da das gesamte Kühlmittel den Luftspalt passieren muß, treten innerhalb desselben erhebliche Reibungsverluste auf. Legt man hier die dimensionslose Taylorzahl

$$Ta = \frac{d\ \omega^2\ b^3}{2\ \nu}$$

mit dem Rotordurchmesser d, der Winkelgeschwindigkeit $\omega$, der Spaltbreite b und der kinematischen Zähigkeit $\nu$, als Kriterium zugrunde, dann treten infolge der Ölviskosität hohe Reibungsverluste im Luftspalt auf. Bei Unregelmäßigkeiten im Kühlsystem kann es dann zu örtlichen Überhitzungen im Bereich des Luftspaltes kommen, die ungünstigenfalls zum Ausfall der Maschine führen.

Eine völlig andere Lösung ist durch die GB-A-796 970 bekannt. Hier findet ein Spaltrohrmotor Verwendung, dessen Rotorraum trocken ausgebildet ist, wobei ein Spaltrohr eine Trennung zwischen trockenem Rotorraum und nassem Statorraum bewirkt. Für Kühlzwecke ist der Stator in den Statornuten mit flüssigkeitsführenden Nutverschlußelementen ausgestattet. Ein als Kühlmittel dienendes Öl zirkuliert durch diese Nutverschlußelemente und transportiert die Abwärme aus dem Windungsbereich des Stators heraus. Im Bereich eines Wickelkopfes erfolgt eine Strömungsumlenkung und das erwärmte Öl fließt durch am Außenumfang des Stators angeordnete Nuten zwischen Gehäusewand und Stator zurück zum anderen Wickelkopf. Diese Lösung vermeidet zwar infolge des trocken ausgebildeten Luftspaltes zwischen Rotor und Stator zusätzlich Flüssigkeits-Reibungsverluste. Durch das druckbeständige und damit dickere Spaltrohr treten jedoch zusätzliche Verluste auf, wodurch der Wirkungsgrad der Maschine negativ beeinflußt wird.

Zusätzliche Kühleinrichtungen können zwar die Absoluttemperatur eines Stators bzw. eines Kühlmediums senken, sie ändern jedoch nicht den Temperaturverlauf innerhalb eines Stators. Betrachtet man den Temperaturverlaufes innerhalb eines Stators und bezieht diesen auf die Statorlänge bzw. den Statorumfang, dann ergibt sich für jede Maschine ein bestimmter Verlauf. Bei den gattungsgemäßen Maschinen mit großer Antriebsleistung sind die Wicklungen durch ungünstige Temperaturverläufe zusätzlich gefährdet. Mit Hilfe der bekannten Kühleinrichtungen wird eine Temperaturverlaufskurve zwar abgesenkt, in ihrer Verlaufsform jedoch nicht verändert. Nachteilige Temperaturspitzen, welche in ungünstigen Fällen eine Wicklungsgefährdung darstellen können, bleiben auf niedrigerem Niveau erhalten. Durch ungünstige Betriebszustände oder äußere Einflüsse können diese Temperaturspitzen jedoch Werte annehmen, die eine Wicklungsgefährdung darstellen.

Durch die EP-A-0 342 554 ist eine elektrische Maschine bekannt, bei der ein sogenannter Außenrotor, ein rohrförmiger Rotor, um einen darin befindlichen Stator rotiert. Für solche, zwangsläfig einen großen Durchmesser aufweisende, elektrische Maschinen wird eine Statorkühlung gezeigt. Diese verwendet zum Wärmeabtransport aus dem Statorblechpaket verschiedene Anordnungen von unterschiedlichen Kühlkanälen. Dabei werden die Kühlkanäle am Grund der Statornuten und somit weit entfernt vom Luftspalt angeordnet.

Durch die EP-A-0 493 704 ist ein Elektromotor bekannt, der bei Antriebskonzepten für Anlagen in großen Wassertiefen Anwendung findet. Zu diesem Zweck ist der Elektromotor, zusammen mit einer anzutreibenden Maschine, in einem zusätzlichen, wasserdicht gekapselten Druckgehäuse angeordnet. Der Elektromotor und der Innenraum des Druckgehäuses sind unter Zwischenschaltung einer Druckausgleichsvorrichtung mit gasförmigem oder flüssigem Medium gefüllt. Um die im Elektromotor anfallende Verlustwärme abzuführen, zirkuliert das Motorfüllmedium durch einen Wärmetauscher einer Kühleinrichtung. Der Wärmetauscher ist an der inneren Wandfläche des Druckgehäuses angeordnet. Eine solche Bauart ist für Unterwassermotoren, die als dünne und lange Antriebsaggregate ausgebildet und häufig in Bohrlöchern Verwendung finden, nicht verwendbar.

Der Erfindung liegt daher das Problem zugrunde, bei den gattungsgemäßen Maschinen den Motor vor einem Ausfall zu schützen und die Wärmeverteilung innerhalb des Stators zu optimieren.

Die Lösung dieses Problems sieht vor, daß der Motor eine Taylorzahl Ta > $10^4$ aufweist, daß der Motor mit Kühlrohren in den Statornuten versehen ist, daß die Motorfüllflüssigkeit im Spalt zwischen Rotor und Stator und in den Kühlrohren gleichströmig verläuft und daß die Kühlrohre als an sich bekannte flüssigkeitsführende Nutenverschlußstäbe ausgebildet sind.

Mit Hilfe dieser Lösung wird der Durchströmquerschnitt für die Motorfüllflüssigkeit im Bereich des Luftspaltes erheblich vergrößert, ohne dabei den Luftspalt hinsichtlich seiner elektrischen Wirkung in irgendeiner Weise negativ zu beeinflussen. Diese Maßnahme reduziert den gesamten Strömungswiderstand imBereich des Luftspaltes, da ein Teil der den Luftspalt passierenden Flüssigkeitsmenge quasi parallel zum Luftspalt aber mit erheblich geringerem Strömungswiderstand durch die Kühlrohre hindurchgeleitet wird. Infolge der parallel zum Luftspalt durchströmten Kühlrohre kann in gleicher Durchströmrichtung bei geringerem Strömungswiderstand eine größere Kühlflüssigkeitsmenge pro Zeiteinheit hindurchgeleitet werden. Die Verwendung flüssigkeitsführender Nutenverschlußstäbe ist zwar bei Spaltrohrmotoren bekannt, um überhaupt ein Kühlmedium durch den Stator leiten zu können. Sie dienen dort jedoch nur dazu, einen Weg für ein Kühlmittel zu erzeugen. Ein vorhandener Strömungsquerschnitt wird damit nicht zusätzlich vergrößert.

Zur Reduzierung der Reibungsverluste wird als Motorfüllflüssigkeit Wasser, Wassergemische bzw. eine Flüssigkeit verwendet, deren Zähigkeit vergleichbar mit der von Wasser ist. Darunter fallen auch Füllflüssigkeiten die Frostschutzmittel in Form von mehrwertigen Alkoholen oder ähnlichen Stoffen enthalten, um somit die Maschine auch bei Temperaturen unter dem Gefrierpunkt betreiben, oder lagern zu können.

Auf dem Prüfstand wurde bei erfindungsgemäß gestalteten Maschinen festgestellt, im Vergleich zu früheren Maschinen, bei denen das gesamte Kühlmedium nur durch den Spalt zwischen Stator und Rotor gepreßt wurde, daß eine erhebliche Vergleichmäßigung des Temperaturverlaufes innerhalb des Motors auftrat. Bedingt durch die größere Kühlwassermenge und die gleichzeitig vergrößerte Berührungsfläche zur Wärmeübertragung im Bereich des Spaltes zwischen Rotor und Stator wurden im Bereich der Statorzähne geringere Temperaturspitzen gemessen. Derartige Temperaturspitzen sind Anzeichen für eine ungleichmäßige Temperaturverteilung und stellen gleichzeitig eine Gefahr für die innerhalb der Statornuten befindliche Isolation der Wicklungen dar.

Eine Ausgestaltung der Erfindung sieht hierzu weiterhin vor, daß innerhalb der Statornut Wicklungsdrähte mit unterschiedlicher Isolationsstärke verwendet werden, wobei die dem Spalt nächstgelegenen Wicklungsdrähte eine stärkere oder dickere Isolation aufweisen, als die dem Nutgrund einer Statornut naheliegenden Wicklungsdrähte. Die von den Reibungsverlusten innerhalb des Spaltes erwärmten Statorzähne haben im Bereich des Spaltes die höchste Temperatur, die zum kühlen Außenbereich des Stators hin abnimmt. Durch eine stärkere Isolation der Wicklungsdrähte im Bereich der Kühlrohre und damit im Bereich der heißeren Statorzähne ist ein besserer Schutz der Wicklung möglich. Die stärkere Isolation reduziert gleichzeitig die Gefahr von sogenannten "water-trees". Solche water-trees bilden sich vermehrt an kunststoffisolierten Wicklungsdrähten (beispielsweise mit vPE), die einem Temperaturgefälle ausgesetzt sind. Sie sind die Folge eines Alterungsprozesses der Isolation und ermöglichen ein Eindringen der Motorfüllflüssigkeit in die Isolation. Ein Kontakt der Motorfüllflüssigkeit mit einem stromführenden Leiter über die water-trees könnte zum Ausfall der Maschine führen. Mit Hilfe der erfindungsgemäßen Gestaltung wird die Ausbildung eines die water-tree-Bildung unterstützenden Temperaturgefälles auch unter extremsten Bedingungen sicher vermieden und damit die Betriebsdauer des Motors verlängert.

Die weiteren Ausgestaltungen der Unteransprüche dienen der Lagesicherung der Wicklung innerhalb einer Statornut, um mechanische Bewegungen der Wicklungsdrähte aufgrund von Motorbelastungen auszuschließen.

Die Erfindung ist in den Zeichnungen dargestellt und wird im folgenden näher beschrieben. Es zeigen die

Fig. 1     einen Schnitt durch einen Motor und die

Fig. 2     als Ausschnitt einen Schnitt durch ein Statorblechpaket mit Wicklung, die

Fig. 3      Rotor, Stator mit Luftspalt.

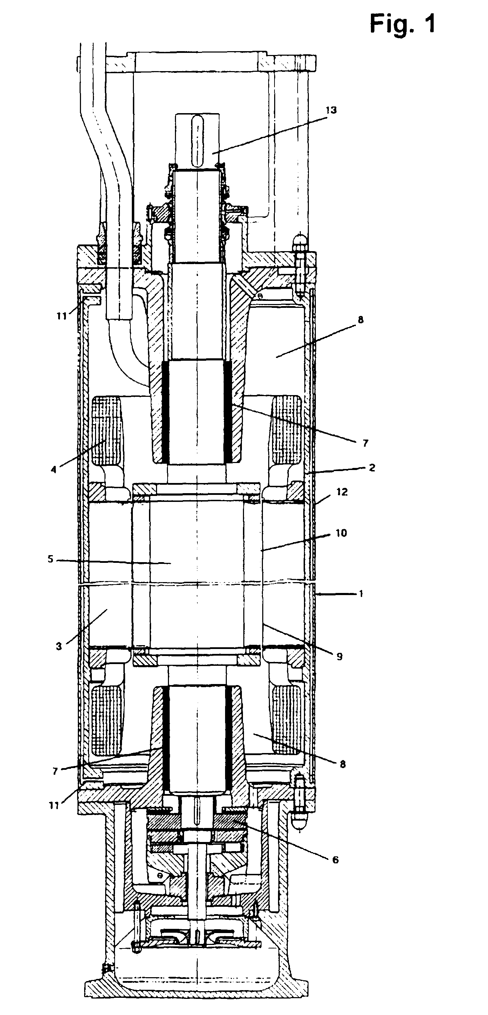

In der Fig. 1 ist ein Unterwassermotor 1 dargestellt, dessen Gehäuse 2 einen aus einzelnen Blechlamellen zusammengesetzter Stator 3 aufweist. In dem Stator 3 befinden sich Spulen 4, mit deren Hilfe das elektrische Drehfeld auf einem Rotor 5 übertragen wird. Der Rotor 5 ist in Lagern 6, 7 gelagert. Ein Motorinnenraum 8 ist vollständig mit Motorfüllflüssigkeit gefüllt, deren Viskosität vergleichbar mit der Viskosität von Wasser ist. Die Motorfüllflüssigkeit kann reines Wasser sein, sie kann aber auch Wasser mit diversen Zusätzen sein, z. B. höhere Alkohole. Zwischen Stator 3 und Rotor 5 befindet sich der sogenannte Luftspalt 9, dessen Weite maßgebend für den Wirkungsgrad der Maschine ist. Der Motor ist sehr lang, weshalb aus Gründen der Darstellung mit Hilfe von Bruchlinien eine verkürzte Wiedergabe erfolgte. Bei der hier gezeigten senkrechten Anordnung des Motors 1 wird sich während des Betriebes eine Thermosyphonströmung ausbilden, d. h. die Motorfüllflüssigkeit wird aufgrund einer Temperaturschichtung von unten nach oben strömen. Durch Anordnung von Kühlrohren 10, die im Bereich der - hier nicht sichtbaren - Statornuten und in unmittelbarer Nähe des Luftspaltes 9 angeordnet sind, kann eine größere Menge der Motorfüllflüssigkeit durch den Luftspaltes 9 und durch die Kühlrohre 10 hindurchströmen. Mittels dieser Maßnahme wird eine erhebliche Vergleichmäßigung der Temperaturverteilung längs der Motorachse möglich. Bei diesen überlicherweise sehr langen Motoren liegt das Durchmesser/Breitenverhältnis in der Größenordnung von 3:1 bis 10:1. Die bisher bei solchen langen Maschinen auftretende ungünstige Wärmekonzentration aufgrund einer Temperaturschichtung im Bereich der oberen Motorhälfte kann somit wirkungsvoll verhindert werden.

Die im oberen Motorbereich aus dem Luftspalt 9 und den Kühlrohren 10 austretende Motorfüllflüssigkeit kann durch Öffnungen 11 in einen Kühlmantel 12 eintreten, der das Motorgehäuse 2 konzentrisch umgibt. Innerhalb des Kühlmantels 12 erfolgt ein Rückströmen zu dem hier als Axiallager ausgebildeten Lager 6 im Endbereich des Motors. An der Außenseite des Kühlmantels befindet sich gewöhnlich Fördermedium, in das der Motor 1 eingetaucht ist und das für eine wirkungsvolle Rückkühlung der Motorfüllflüssigkeit sorgt. Im einem Wellenstummel 13 gegenüberliegenden Bereich des Motors 1 strömt das Fördermedium wieder in den Motorinnenraum 8 zurück und schmiert dabei gleichzeitig ein als Axiallager ausgebildetes Lager 6.

Für die Kühlung der Motorfüllflüssigkeit kann auch jede andere bekannte Vorrichtung Verwendung finden. Die Erfindung ist also nicht auf den hier gezeigten Mantel 12 beschränkt. Es ist auch ohne weiteres möglich, im Bereich der Lager 6 oder 7 auf der Motorwelle eine Fördereinrichtung vorzusehen, mit deren Hilfe eine zwangsweise Umwälzung der Motorfüllflüssigkeit innerhalb des Motorinnenraumes 8 stattfinden kann. Diese ist unterhalb des Lagers 6 schematisch dargestellt.

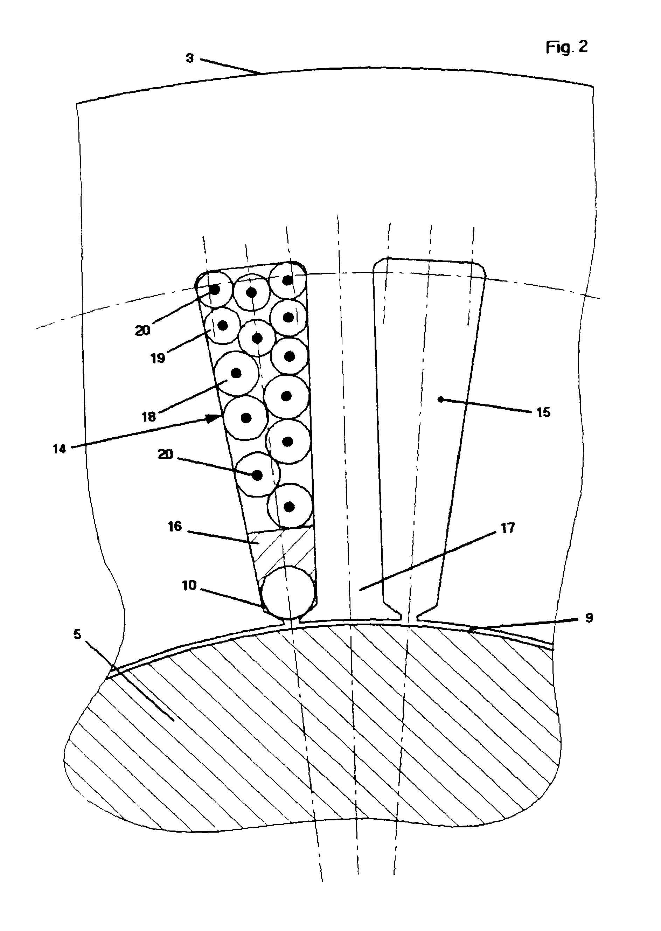

Die Fig. 2 zeigt einen Ausschnitt aus dem Stator 3 und den Aufbau der darin befindlichen und aus einer Vielzahl von Drähten bestehenden Wicklung 14. Die Wicklung ist in Statornuten 15 eingelegt; innerhalb der Statornuten 15 sind Wicklungen 14 durch Nutenfüllstäbe 16 in ihrer Position gehalten. Ein Kühlrohr 10 übernimmt hier gleichzeitig die Aufgabe eines Nutverschlußstabes. Das Kühlrohr 10 kann hier jede gewünschte und in die Nut 15 einbaubare Querschnittsform aufweisen. Aufgrund der Verwendung von Kühlrohren 10 kann der Durchströmquerschnitt im Bereich des Luftspaltes 9 um über 50 % vergrößert werden, ohne daß hierbei die elektrische Leistung in irgendeiner Weise negativ beeinflußt wird. Die Motorfüllflüssigkeit strömt dann quasi parallel durch die Kühlrohre 10 und den Luftspalt 9. Die Reibungsverluste, die sich im Luftspalt 9 zwischen dem Stator 3 und dem Rotor 5 einstellen sowie die dadurch bedingte Erwärmung des Stators 3 kann mit Hilfe der den Durchströmquerschnitt vergrößernden Kühlrohre 10 in einfacher und wirkungsvoller Weise kompensiert werden.

Ein Wärmeeintrag in den aus einzelnen Blechschnitten zusammengesetzten Stator 3 erfolgt unmittelbar über die Statorzähne 17. Somit ergeben sich in demjenigen Teil der Statorzähne 17, der dem Luftspalt 9 am nächsten ist, erhöhte Temperaturen. Dadurch könnte in ungünstigen Fällen die Isolation 18, 19 der Wicklung 14 gefährdet werden. Zum Schutz der kunststoffisolierten Wicklungsdrähte 20 ist daher als eine Ausgestaltung der Erfindung die Isolation 18 derjenigen Wicklungsdrähte 20 stärker ausgebildet, die in dem Teil der Statornut 15 angeordnet sind, der näher am Luftspalt 9 liegt. Der metallische Querschnitt der Wicklungsdrähte 20 ist hier konstant. Durch die stärkere Isolation 18 in demjenigen Bereich der Statorzähne 17, die eine höhere Temperatur aufweisen, kann der Alterungsprozeß der Isolation 18 und damit die Gefahr von sich bildenden water-trees wirkungsvoll verhindert oder zumindest gravierend verringert werden.

Die Nutenfüllstäbe 16 können ein- oder zweiteilig ausgebildet sein und deren Lage kann in der vorliegenden Zeichnung ober- oder unterhalb oder auch beiderseits des Kühlrohres 10 erfolgen. Als vorteilhaft hat sich die Verwendung eines aus quellfähigem Material bestehenden Nutenfüllstabes 16 erwiesen, welcher unter dem Einfluß der Motorfüllflüssigkeit aufquillt und eine lagesichernde Funktion auf die Wicklung 14 ausübt.

**Patentansprüche**

1.    Flüssigkeitsgefüllte elektrische Maschine, die als Unterwassermotor ausgebildet ist, insbesondere zum Antrieb von vollständig getaucht betriebenen Arbeitsmaschinen, wobei im Motorinnenraum(8) eine für Kühl- und Schmierzwecke verwendete Motorfüllflüssigkeit niedriger Viskosität angeordnet ist, der Motor(1) für mittlere und große Antriebsleistungen ausgelegt ist und die Motorfüllflüssigkeit den Spalt (9) zwischen Rotor(5) und Stator(3) durchströmt, **dadurch gekennzeichnet**, daß der Motor eine Taylorzahl $Ta > 10^4$ aufweist, daß der Motor mit Kühlrohren (10) in den Statornuten versehen ist, daß die Motorfüllflüssigkeit im Spalt(9) zwischen Rotor(5) und Stator(3) und in den Kühlrohren(10) gleichströmig verläuft und daß die Kühlrohre (10) als an sich bekannte flüssigkeitsführende Nutenverschlußstäbe ausgebildet sind.

2. Antriebsmaschine nach Anspruch 1, dadurch gekennzeichnet, daß mindestens je ein Kühlrohr (10) in der Statornut vorhanden ist.

3. Antriebsmaschine nach Anspruch 1, dadurch gekennzeichnet, daß die Anzahl der Kühlrohre (10) geringer ist als die Anzahl der Statornuten.

4. Antriebsmaschine nach einem der Ansprüche 1, 2 oder 3, dadurch gekennzeichnet, daß dem Spalt(9) naheliegenden Wicklungsdrähte(20) eine dickere Isolation(18) aufweisen als einem Nutgrund einer Statornut naheliegende Wicklungsdrähte(19).

5. Antriebsmaschine nach Ansprüche 1 bis 4, dadurch gekennzeichnet, daß im Bereich der Kühlrohre(10) zusätzliche Nutenfüllstäbe(16) angeordnet sind.

6. Antriebsmaschine nach Anspruch 5, dadurch gekennzeichnet, daß die Nutenfüllstäbe(16) aus quellfähigem Material bestehen.

7. Antriebsmaschine nach Anspruch 6, dadurch gekennzeichnet, daß die Nutenfüllstäbe(16) aus Holz bestehen.

8. Antriebsmaschine nach Anspruch 5, 6 oder 7, dadurch gekennzeichnet, daß die Nutenfüllstäbe(16) ein- oder beidseitig an den flüssigkeitsführenden Kühlrohren(10) anliegen.

9. Antriebsmaschine nach einem der Ansprüche 1 bis 8, dadurch gekennzeichnet, daß die flüssigkeitsführenden Kühlrohre(10) aus metallischem oder nicht metallischem Werkstoff bestehen.

10. Antriebsmaschine nach einem der Ansprüche 1 bis 9, dadurch gekennzeichnet, daß die Statornuten (15) als offene oder geschlossene Nuten ausgebildet sind.

**Claims**

1. Liquid-filled electrical machine, which is configured as an underwater motor, in particular for driving fully-immersed driven working machines, a motor filling liquid of low viscosity used for cooling and lubricating purpose being arranged in the motor internal space (8), the motor (1) being designed for medium and large drive powers and the motor filling liquid flowing through the gap (9) between rotor (5) and stator (3), characterized in that the motor has a Taylor number $Ta > 10^4$, in that the motor is provided with cooling tubes (10) in the stator grooves, in that the motor filling liquid passes in uniflow in the gap (9) between the rotor (5) and stator (3) and in the cooling tubes (10) and in that the cooling tubes (10) are configured as liquid-carrying groove-closing rods, known per se.

2. Drive machine according to Claim 1, characterized in that at least one cooling tube (10) is present in the stator groove.

3. Drive machine according to Claim 1, characterized in that the number of cooling tubes (10) is less than the number of stator grooves.

4. Drive machine according to one of Claims 1, 2, or 3, characterized in that winding wires (20) close to the gap (9) have a thicker insulation (18) than winding wires (19) near the bottom of a stator groove.

5. Drive machine according to Claims 1 to 4, characterized in that additional groove filling rods (16) are arranged in the region of the cooling tubes (10) .

6. Drive machine according to Claim 5, characterized in that the groove filling rods (16) consist of material which can swell.

7. Drive machine according to Claim 6, characterized in that the groove filling rods (16) consist of wood.

8. Drive machine according to Claim 5, 6 or 7, characterized in that the groove filling rods (16) are in contact on one side or on both sides of the liquid-carrying cooling tubes (10).

9. Drive machine according to one of Claims 1 to 8, characterized in that the liquid-carrying cooling tubes (10) consist of metallic or non-metallic material.

10. Drive machine according to one of Claims 1 to 9, characterized in that the stator grooves (15) are configured as open or closed grooves.

## Revendications

1.  Machine électrique remplie de liquide, se présentant sous forme de moteur submersible, en particulier pour l'entraînement de machines de travail fonctionnant complètement submergées, un liquide de remplissage pour moteur de faible viscosité utilisé à des fins de refroidissement et de lubrification étant disposé à l'intérieur de l'espace interne du moteur (8), le moteur (1) étant conçu pour des puissances d'entraînement moyennes et grandes et le liquide de remplissage pour moteur circulant dans l'entrefer (9) entre le rotor (5) et le stator (3), **caractérisée en ce que** le moteur présente un indice de Taylor Ta > $10^4$, en ce que le moteur est pourvu de tubes de refroidissement (10) dans les encoches du stator, en ce que le liquide de remplissage pour moteur s'écoule uniformément dans l'entrefer (9) entre le rotor (5) et le stator (3) et dans les tubes de refroidissement (10) et en ce que les tubes de refroidissement (10) se présentent sous la forme de barres de fermeture des encoches guidant le liquide et connues en soi.

2.  Machine d'entraînement selon la revendication 1, caractérisée en ce qu'il est prévu au moins un tube de refroidissement (10) respectif dans l'encoche du stator.

3.  Machine d'entraînement selon la revendication 1, caractérisée en ce que le nombre des tubes de refroidissement (10) est inférieur au nombre des encoches de stator.

4.  Machine d'entraînement selon l'une quelconque des revendications 1, 2 ou 3, caractérisée en ce que les fils d'enroulement (20) proches de l'entrefer (9) présentent une isolation (18) plus épaisse que les fils d'enroulement (19) proches d'un fond d'encoche d'une encoche de stator.

5.  Machine d'entraînement selon les revendications 1 à 4, caractérisée en ce que des barres de remplissage des encoches (16) supplémentaires sont disposées dans la zone des tubes de refroidissement (10).

6.  Machine d'entraînement selon la revendication 5, caractérisée en ce que les barres de remplissage des encoches (16) se composent de matériau gonflable.

7.  Machine d'entraînement selon la revendication 6, caractérisée en ce que les barres de remplissage des encoches (16) se composent de bois.

8.  Machine d'entraînement selon la revendication 5, 6 ou 7, caractérisée en ce que les barres de remplissage des encoches (16) reposent d'un côté ou des deux côtés contre les tubes de refroidissement (10) guidant le liquide.

9.  Machine d'entraînement selon l'une quelconque des revendications 1 à 8, caractérisée en ce que les tubes de refroidissement (10) guidant le liquide se composent d'un matériau métallique ou non métallique.

10. Machine d'entraînement selon l'une quelconque des revendications 1 à 9, caractérisée en ce que les encoches du stator (15) se présentent sous la forme d'encoches ouvertes ou fermées.

# Fig. 1

Fig. 2